# EUROPÄISCHE PATENTSCHRIFT

(11) **EP 4 133 932 B1**
(45) Veröffentlichungstag und Bekanntmachung des Hinweises auf die Patenterteilung: **02.10.2024**
(21) Anmeldenummer: 22188041.2
(22) Anmeldetag: 01.08.2022
(51) Int. Cl.: A01D 43/08

(54) **VERFAHREN ZUM STEUERN EINES EINE ERNTEMASCHINE BEGLEITENDEN GESPANNS**
METHOD FOR CONTROLLING A TRAILER ACCOMPANYING A HARVESTING MACHINE
MÉTHODE DE COMMANDE D'UNE REMORQUE ACCOMPAGNANT UNE MACHINE DE RÉCOLTE

(30) Priorität: 11.08.2021 DE 102021120949
(43) Veröffentlichungstag der Anmeldung: 15.02.2023
(73) Patentinhaber: Maschinenfabrik Bernard Krone GmbH & Co. KG, 48480 Spelle (DE)
(72) Erfinder: Mösker, Markus, 48480 Lünne (DE)

(56) Entgegenhaltungen:
- EP-A1- 3 000 307
- EP-A2- 2 452 551
- EP-B2- 1 219 158
- US-A1- 2012 263 560

## Beschreibung

Die vorliegende Erfindung betrifft ein Verfahren zum Steuern eines eine Erntemaschine begleitenden Gespanns, nach dem Oberbegriff von Anspruch 1 sowie eine Fahrzeug-Kombination nach Anspruch 14.

Bei landwirtschaftlichen Erntemaschinen wie z.B. Feldhäckslern ist es bekannt, Erntegut aufzunehmen, beispielsweise durch Häckseln weiterzuverarbeiten und dann an ein Begleitfahrzeug wie einen Anhänger zu übergeben. Für das Überladen des Ernteguts, bei dem es sich z.B. um Mais oder Gras handeln kann, wird eine Überladevorrichtung, oftmals ein Auswurfkrümmer, genutzt. Während des Erntens fährt das Begleitfahrzeug, welches Teil eines Gespanns mit einer Zugmaschine sein kann, entweder neben der Erntemaschine oder - z.B. beim Anhäckseln - hinter derselben. Für ein störungsfreies Überladen ist die Relativposition des Begleitfahrzeugs zur Erntemaschine von wesentlicher Bedeutung. Wenngleich die Überladevorrichtung in der Regel verstellbar ausgebildet ist, um Erntegut in unterschiedliche Bereiche abzuladen, ist es nicht möglich, hiermit zufällige, unvorhersehbare Positionsveränderungen des Begleitfahrzeugs auszugleichen. D.h., die Relativposition sollte bis auf geringfügige Abweichungen konstant sein bzw. Änderungen derselben sollten für den Fahrer der Erntemaschine vorhersehbar sein. Insofern ist eine Geschwindigkeitssynchronisation von Erntemaschine und Begleitfahrzeug notwendig. Dies bedeutet insbesondere bei einem Gespann aus Zugmaschine und Anhänger eine erhebliche Herausforderung für den Fahrer der Zugmaschine, da die Erntemaschine immer wieder ihre Geschwindigkeit ändert, z.B. um unterschiedliche Bestandsdichten bearbeiten zu können. Zudem kann es zu Missverständnissen kommen, wenn bspw. der Fahrer der Erntemaschine zwischenzeitlich die Geschwindigkeit erhöht, um gegenüber dem Anhänger vorzufahren und einen vorderen Bereich desselben beladen zu können, und der Fahrer der Zugmaschine ebenfalls die Geschwindigkeit erhöht, weil er versucht, die Relativposition einzuhalten.

Um diese Probleme zu beheben, ist im Stand der Technik bereits vorgeschlagen worden, eine Übertragungsstrecke zwischen der Erntemaschine und der Zugmaschine einzurichten, über die die Zugmaschine während des Erntevorgangs ferngesteuert werden kann. Ein solches System ist bspw. aus der EP 1 219 158 B2 bekannt. Problematisch ist bei einer solchen Lösung, dass die beiden Maschinen über kompatible (drahtlose) Kommunikationsmittel verfügen müssen, die seitens der Zugmaschine wiederum mit der Lenkung bzw. Geschwindigkeitsregelung verbunden sein müssen. Die entsprechenden Voraussetzungen auf dem Wege einer Nachrüstung zu schaffen, ist bestenfalls teuer und aufwendig, schlimmstenfalls unrealistisch. Somit müssten beide Maschinen ab Werk über die entsprechenden Voraussetzungen verfügen, was schon aufgrund fehlender allgemeiner Kommunikationsstandards praktisch nur für Maschinen ein und desselben Herstellers möglich ist.

Die Druckschrift US 2012/0263560 A1 offenbart ein System zur Steuerung einer Erntegutüberladung von einer selbstfahrenden landwirtschaftlichen Erntemaschine in einen Ladebehälter eines Transportfahrzeugs, wobei eine Steuereinheit betreibbar ist, eine zum Überladen in den Ladebehälter geeignete Relativposition des Transportfahrzeugs gegenüber der Erntemaschine vorzugeben.

Die Druckschrift EP 2 452 551 A2 offenbart eine Steueranordnung zur Kontrolle eines Überladens landwirtschaftlichen Ernteguts von einer Erntemaschine auf ein einen Ladebehälter umfassendes Transportfahrzeug, wobei eine Steuereinrichtung betreibbar ist, die Position des Abgabeendes einer Austrageinrichtung gegenüber der Erntemaschine und/oder die Auswurfrichtung der Austrageinrichtung und/oder die Position des Transportfahrzeugs mit dem Ladebehälter gegenüber der Erntemaschine selbsttätig zu kontrollieren.

Aufgabe der Erfindung ist es, eine alternative, insbesondere wirtschaftlich gut realisierbare Möglichkeit zur Koordination der Bewegungen einer Erntemaschine und eines diese begleitenden Gespanns bereitzustellen.

Die Aufgabe wird gelöst mit einem Verfahren mit den Merkmalen des unabhängigen Patentanspruchs 1. Vorteilhafte Ausführungsformen sind den abhängigen Ansprüchen entnehmbar.

Dafür wird ein Verfahren zur Steuerung eines eine Erntemaschine begleitenden Gespanns geschaffen, welches Gespann eine Zugmaschine und einen hiervon gezogenen Anhänger aufweist, auf welchen die Erntemaschine wenigstens zeitweise Erntegut mittels einer Überladevorrichtung überlädt, wobei die Erntemaschine mit einer ersten Sendevorrichtung ein erstes Steuersignal sendet, um eine Relativposition des Anhängers relativ zur Erntemaschine zu beeinflussen. Bei der Erntemaschine kann es sich insbesondere um einen Feldhäcksler oder einen Mähdrescher handeln. Die Erntemaschine nimmt im Betrieb Erntegut auf, z.B. Mais, Getreide oder Gras, und lädt dieses auf den Anhänger über, normalerweise nach einer Weiterverarbeitung, bspw. durch Häckseln. Das Überladen selbst erfolgt mittels einer Überladevorrichtung der Erntemaschine, die in der Regel dazu dient, den übergeladenen Erntegutstrom zu richten und/oder zu bündeln. Bspw. kann es sich bei der Überladevorrichtung um einen Auswurfkrümmer bzw. Auswurfbogen handeln. Der Anhänger ist zusammen mit einer Zugmaschine Teil eines Gespanns, welches die Erntemaschine begleitet. Normalerweise fährt das Gespann neben oder hinter der Erntemaschine und wenigstens ungefähr parallel zu dieser. Die Zugmaschine, welche auch als Schlepper bezeichnet werden kann, kann unterschiedlich ausgebildet sein, ist allerdings in jedem Falle selbstfahrend, also mit eigenem Fahrantrieb ausgestattet und dazu ausgebildet, den Anhänger zu ziehen. Der Anhänger verfügt normalerweise über keinen eigenen Fahrantrieb. Er ist zur Aufnahme des übergeladenen Erntegut ausgebildet, verfügt also über einen entsprechenden Laderaum. Bei dem Anhänger kann es sich auch um einen Ladewagen handeln, der mit einer Aufnahmevorrichtung bzw. Pick-up ausgestattet ist, um Erntegut vom Boden aufzunehmen. Insbesondere kann der Anhänger eine Wiegevorrichtung aufweisen, mittels derer das Gewicht des bereits aufgenommenen Erntegut bestimmt werden kann. Das Überladen des Ernteguts erfolgt mindestens zeitweise, d. h. es kann entweder kontinuierlich erfolgen, also gewissermaßen ohne Unterbrechungen, oder es können Pausen vorgesehen sein, in welchen z.B. das Erntegut in der Erntemaschine zwischengespeichert wird.

Die Erntemaschine sendet mit einer ersten Sendevorrichtung ein erstes Steuersignal, um die Relativposition des Anhängers relativ zur Erntemaschine zu beeinflussen. Ziel ist dabei, die genannte Relativposition möglichst exakt einzustellen, was allerdings in der Praxis u.U. nicht zu jedem Zeitpunkt möglich ist. Normalerweise bewegt sich die Erntemaschine auf einer vorgesehenen ersten Fahrspur, während sich das Gespann auf einer ebenfalls vorgesehenen zweiten Fahrspur bewegt. Die genannten Fahrspuren sind normalerweise bis auf geringfügige Abweichungen parallel zueinander und können, z.B. beim Anhäckseln, auch miteinander identisch sein. Insofern ist es normalerweise nur vorgesehen, die Relativposition in Bezug auf die vorgesehenen Fahrspuren zu beeinflussen, also gewissermaßen "eindimensional". Es versteht sich, dass die Relativposition in engem Zusammenhang mit den Geschwindigkeiten der Erntemaschine sowie des Anhängers bzw. der Differenz dieser Geschwindigkeiten steht. Wenngleich sich der Begriff "senden" allgemein sowohl auf drahtlose als auch drahtgebundene Übermittlungen bezieht, wird das erste Steuersignal in aller Regel drahtlos gesendet, d.h. die erste Sendevorrichtung ist zum drahtlosen Senden ausgebildet. Es kann sich um ein analoges Signal handeln, normalerweise allerdings um ein digitales Signal.

Erfindungsgemäß empfängt der Anhänger mit einer ersten Empfangsvorrichtung das erste Steuersignal und sendet in Abhängigkeit vom ersten Steuersignal mit einer zweiten Sendevorrichtung ein zweites Steuersignal, welches eine Geschwindigkeits-Information enthält, wobei Zugmaschine das zweite Steuersignal mit einer zweiten Empfangsvorrichtung empfängt und daraufhin ihre Ist-Geschwindigkeit entsprechend der Geschwindigkeits-Information einstellt. D.h., der Anhänger weist eine erste Empfangsvorrichtung auf, die mit einer ersten Sendevorrichtung der Erntemaschine kompatibel ist und somit das erste Steuersignal empfangen kann. Diese können somit über eine erste Übertragungsstrecke wenigstens einseitig kommunizieren. Jede hier und im Folgenden genannte Sendevorrichtung sowie Empfangsvorrichtung kann als Sende-Empfangs-Vorrichtung ausgebildet sein, so dass eine beidseitige Kommunikation möglich ist, wenngleich dies zur Realisierung der Erfindung nicht notwendig ist.

Selbstverständlich kann der Anhänger eine Verarbeitungseinheit aufweisen, die das erste Steuersignal verarbeitet und z.B. darin enthaltene Informationen decodiert. Die gleiche oder eine andere Verarbeitungseinheit kann auch zur Erzeugung des zweiten Steuersignals dienen, welches über die zweite Sendevorrichtung gesendet wird. Die zweite Sendevorrichtung ist ebenfalls am Anhänger angeordnet bzw. ist ein Teil desselben. Das zweite Steuersignal enthält eine Geschwindigkeits-Information, man könnte auch sagen, eine Information, die sich auf eine Geschwindigkeit bezieht. Das zweite Steuersignal wird von der Zugmaschine mittels einer zweiten Empfangsvorrichtung empfangen. Somit sind die zweite Sendeeinrichtung und die zweite Empfangseinrichtung kompatibel und können über eine zweite Übertragungsstrecke wenigstens einseitig kommunizieren. Da die Zugmaschine und der Anhänger ohnehin zur Zugkraftübertragung mechanisch aneinander gekoppelt sind, kann das zweite Steuersignal auch drahtgebunden übertragen werden. Wenngleich die Erfindung nicht hierauf beschränkt ist, können der Anhänger und die Zugmaschine insbesondere über einen ISOBUS verbunden sein, über welchen die zweite Sendevorrichtung das zweite Steuersignal (digital) an die zweite Empfangsvorrichtung sendet. Selbstverständlich ist auch eine drahtlose Übertragung möglich.

Wenn die Zugmaschine das zweite Steuersignal empfängt, stellt sie ihre Ist-Geschwindigkeit entsprechend der Geschwindigkeits-Information ein. Es versteht sich, dass auf Seiten der Zugmaschine ebenfalls eine Verarbeitungseinheit vorhanden sein kann, die das zweite Steuersignal verarbeitet und hieraus die Soll-Geschwindigkeit ableitet. Ergibt sich aus der Geschwindigkeits-Information, dass die Zugmaschine ihre Ist-Geschwindigkeit ändern (also erhöhen oder verringern) muss, wird die Ist-Geschwindigkeit entsprechend angepasst, andernfalls wird die momentane Ist-Geschwindigkeit beibehalten. Dabei ist zu beachten, dass die Genauigkeit der Einstellung der Ist-Geschwindigkeit u.a. davon abhängt, mit welcher Genauigkeit der Zugmaschine ihre Ist-Geschwindigkeit vorliegt, also z.B. wie genau sie diese messen kann.

Erfindungsgemäß erfolgt also die Geschwindigkeitssteuerung der Zugmaschine nicht direkt über das von der Erntemaschine gesendete erste Steuersignal, sondern auf dem Umweg über den Anhänger durch das zweite Steuersignal. Trotz dieser indirekten Signalübermittlung hat das erfindungsgemäße Verfahren klare Vorteile. Diese liegen insbesondere darin begründet, dass eine Steuerung von Funktionen einer Zugmaschine durch einen Anhänger (oder ein anderes Zusatzgerät) bereits bei vielen Herstellern ein etablierter Standard ist, der insbesondere in Form des sogenannten TIM (Traktor Implement Management) auch herstellerübergreifende Verbindungen ermöglicht. Es existieren heutzutage eine Vielzahl von Zugmaschinen bzw. Anhängern unterschiedlicher Hersteller, die für TIM ausgelegt sind, wobei insbesondere der ISOBUS-Standard verwendet wird. D.h. das Senden des zweiten Steuersignals und die entsprechende Geschwindigkeitsanpassung seitens der Zugmaschine lassen sich bei all diesen Geräten ohne eine Um- oder Nachrüstung realisieren. Es kann somit eine bereits vorhandene Infrastruktur zur externen Steuerung der Zugmaschine genutzt werden, was bei einer direkten Steuerung durch die Erntemaschine nicht möglich wäre (zumindest nicht unter Ausnutzung des weitverbreiteten TIM). Soweit bereits eine externe Steuerung der Zugmaschine durch den Anhänger vorgesehen ist, ist zusätzlich lediglich (über die erste Sendevorrichtung und die erste Empfangsvorrichtung) eine Kommunikationsmöglichkeit zwischen der Erntemaschine und dem Anhänger nötig sowie eine Verbindung zwischen der ersten Empfangsvorrichtung und den zweiten Sendevorrichtung, ggf. mit einer zwischengeordneten Signalverarbeitung, um aus dem ersten Steuersignal das zweite Steuersignal zu generieren. Wenngleich dies nicht erfindungswesentlich ist, kann die Kommunikation zwischen der Erntemaschine und dem Anhänger auch für weitere Zwecke genutzt werden. Sofern eine beidseitige Kommunikation möglich ist, können bspw. Daten einer Wiegevorrichtung des Anhängers an die Erntemaschine übermittelt werden, die wiederum seitens der Erntemaschine zur Kalibrierung einer Ertragserfassung genutzt werden können.

Der Begriff "Steuersignal" ist in diesem Zusammenhang nicht dahingehend auszulegen, dass die Zugmaschine im Sinne einer Lenkung gesteuert wird. Wenngleich das erste bzw. zweite Steuersignal auch Informationen über einen Lenkwinkels enthalten könnten, wird der Lenkwinkel normalerweise unabhängig von den genannten Steuersignalen eingestellt. Wie bereits oben erwähnt, folgt die Zugmaschine normalerweise einer vorgegebenen (zweiten) Fahrspur, deren Einhaltung bspw. mittels GPS, optischer Sensoren oder dergleichen überprüft werden kann.

Die Geschwindigkeits-Information könnte z.B. in einer Anweisung bestehen, die Ist-Geschwindigkeit zu erhöhen oder zu verringern. Gemäß einer anderen, vorteilhaften Ausführungsform wird mit dem zweiten Steuersignal eine Soll-Geschwindigkeit vorgegeben, wobei die Zugmaschine ihre Ist-Geschwindigkeit entsprechend der Soll-Geschwindigkeit einstellt. Mit dem zweiten Steuersignal wird eine Soll-Geschwindigkeit vorgegeben, d.h. die Soll-Geschwindigkeit ist entweder direkt im zweiten Steuersignal enthalten (z.B. in codierter Form) oder kann aus diesem abgeleitet werden. Wenn die Zugmaschine das zweite Steuersignal empfängt, stellt sie ihre Ist-Geschwindigkeit entsprechend der Soll-Geschwindigkeit ein. Es versteht sich, dass auf Seiten der Zugmaschine ebenfalls eine Verarbeitungseinheit vorhanden sein kann, die das zweite Steuersignal verarbeitet und hieraus die Soll-Geschwindigkeit ableitet. Wenn die vorgegebene Soll-Geschwindigkeit von der derzeitigen Ist-Geschwindigkeit abweicht, wird die Ist-Geschwindigkeit entsprechend angepasst. Andernfalls wird die momentane Ist-Geschwindigkeit beibehalten. Auch bei dieser Ausführungsform ist es relevant, mit welcher Genauigkeit die Ist-Geschwindigkeit seitens der Zugmaschine vorliegt. Bei unzureichender Genauigkeit führt ein Einstellen "entsprechend der Soll-Geschwindigkeit" u.U. nicht dazu, dass die vorgegebene Soll-Geschwindigkeit tatsächlich erreicht wird.

Es ist im Rahmen der Erfindung denkbar, dass die Soll-Geschwindigkeit nur indirekt aus dem ersten Steuersignal abgeleitet werden kann, bspw. derart, dass das erste Steuersignal eine Relativposition angibt, die der Anhänger erreichen soll, woraus sich unter Zuhilfenahme weiterer Angaben die Soll-Geschwindigkeit ableiten lässt. Allerdings ist es bevorzugt, dass die Soll-Geschwindigkeit mit dem ersten Steuersignal vorgegeben wird. Insbesondere kann die Soll-Geschwindigkeit bspw. in digital codierter Form im ersten Steuersignal enthalten sein.

Eine typische Betriebsart sieht vor, dass der Ladewagen mit gleichbleibender Relativposition (neben oder hinter der Erntemaschine) fährt. Sofern die Erntemaschine und das Gespann geradeaus fahren, müssen hierfür ihre Geschwindigkeiten übereinstimmen. D.h., es kann mit dem ersten Steuersignal eine Soll-Geschwindigkeit vorgegeben werden, die mit der Geschwindigkeit der Erntemaschine übereinstimmt. In bestimmten Situationen ist es jedoch sinnvoll, dass mit dem ersten Steuersignal wenigstens zeitweise eine von einer Erntemaschinen-Geschwindigkeit der Erntemaschine abweichende Soll-Geschwindigkeit vorgegeben wird, um die Relativposition des Anhängers zu verändern. Soll der Anhänger im Verhältnis zur Erntemaschine weiter vorne positioniert werden, kann eine Soll-Geschwindigkeit gewählt werden, die größer ist als die Erntemaschinen-Geschwindigkeit, soll er weiter hinten positioniert werden, kann eine Soll-Geschwindigkeit gewählt werden, die kleiner als die Erntemaschinen-Geschwindigkeit ist. Die Erntemaschinen-Geschwindigkeit kann bspw. über GPS bestimmt werden oder aus einer Drehzahl eines Motors oder anderer Antriebskomponenten der Erntemaschine.

Vorteilhaft kann (wenigstens einmal, vorteilhaft auch wiederholt) eine Kalibrierung der Soll-Geschwindigkeit durchgeführt werden, so dass diese um einen Kalibrierungsfaktor verändert wird, um eine durch Schlupf bedingte Abweichung der Ist-Geschwindigkeit von der Soll-Geschwindigkeit auszugleichen. Auf dem Untergrund, auf dem sich die Zugmaschine und der Anhänger bewegen, tritt in der Regel ein Nicht-vernachlässigbarer Schlupf auf, d.h. die angetriebenen Räder der Zugmaschine rollen nicht ideal auf dem Untergrund ab. Dementsprechend wird eine von der Zugmaschine antriebsseitig eingestellte Geschwindigkeit immer größer sein als die tatsächliche, absolute Ist-Geschwindigkeit. Wenn die Zugmaschine ihren Antriebsdaten zufolge die Soll-Geschwindigkeit erreicht hat, weicht die Ist-Geschwindigkeit dennoch von dieser ab. Um dies auszugleichen, kann die Soll-Geschwindigkeit kalibriert werden, d.h. sie kann mit einem Kalibrierungsfaktor (der in aller Regel größer als 1 ist) multipliziert werden. Wenn die Zugmaschine bspw. mit der Erntemaschinen-Geschwindigkeit fahren soll, wird also eine Soll-Geschwindigkeit übermittelt, die um den Kalibrierungsfaktor größer ist als die Erntemaschinen-Geschwindigkeit. Es ist normalerweise ausreichend, dass für alle Soll-Geschwindigkeiten, die der Zugmaschine vorgegeben werden, der gleiche Kalibrierungsfaktor verwendet wird (zumindest bis zur nächsten Kalibrierung). Es ist zu beachten, dass an den Antriebsrädern der Erntemaschine im Allgemeinen ebenfalls einen Schlupf auftritt, der in einigen Situationen ebenso groß oder sogar größer sein kann als der Schlupf an den Antriebsräder der Zugmaschine. Letzteres könnte bspw. durch einen Kalibrierungsfaktor, der kleiner als 1 ist, ausgeglichen werden. Da sich der Schlupf in Abhängigkeit von der Bodenbeschaffenheit und insbesondere von der mit der Zeit zunehmenden Beladung des Anhängers verändert, ist in der Regel eine wiederholte Kalibrierung mit entsprechender Anpassung des Kalibrierungsfaktors notwendig.

Bevorzugt erfolgt die Kalibrierung auf Seiten der Erntemaschine, so dass die kalibrierte Soll-Geschwindigkeit mit dem ersten Steuersignal vorgegeben wird. D.h., mit dem ersten Steuersignal wird die bereits um den Kalibrierungsfaktor modifizierte Soll-Geschwindigkeit vorgegeben. Die Kalibrierung kann u.U. automatisch durchgeführt werden, bspw. derart, dass die Erntemaschine wiederholt die Relativposition ermittelt (z.B. durch Vergleich von GPS-Daten) und überprüft, ob sich diese entsprechend der Erntemaschinen-Geschwindigkeit und der übermittelten Soll-Geschwindigkeit entwickelt (z.B. konstant bleibt). Alternativ kann die Kalibrierung auch durch einen Fahrer der Erntemaschine vorgenommen werden. Der Fahrer kann bspw. visuell die Relativposition des Anhängers überprüfen und falls notwendig, die Kalibrierung manuell vornehmen. Bspw. könnte ein Schieberegler zur Veränderung des Kalibrierungsfaktors dienen, wobei der Fahrer die Position des Schiebereglers solange verändert, bis sich die Relativposition des Anhängers nicht mehr verändert.

Solange die Erntemaschine und das Gespann parallel geradeaus fahren, können beide (wenigstens zeitweise) mit gleicher Geschwindigkeit fahren, so dass die Relativposition konstant bleibt. Während einer Kurvenfahrt, bei welcher die Erntemaschine und das Gespann auf unterschiedlichen Kurvenradien fahren, ist es allerdings vorteilhaft, wenn die Soll-Geschwindigkeit automatisch in Abhängigkeit von den Kurvenradien und der Erntemaschinen-Geschwindigkeit der Erntemaschine angepasst wird. Um hierbei die Relativposition in etwa konstant zu halten, muss die kurveninnere Einheit (Erntemaschine oder Gespann) langsamer fahren als die kurvenäußere Einheit (Gespann oder Erntemaschine). Geht man von konzentrischen Fahrkurven aus, sollte das Verhältnis der Fahrgeschwindigkeiten dem Verhältnis der Kurvenradien entsprechen. Selbstverständlich sind auch kompliziertere Anpassungen denkbar. Sofern der Erntemaschine die vorgesehenen Fahrkurven für das Gespann sowie für die Erntemaschine selbst im Voraus bekannt sind, kann anhand dieser die Anpassung der Soll-Geschwindigkeit vorgenommen werden. Ist dies nicht der Fall, sind andere Möglichkeiten gegeben, von denen einige nachfolgend diskutiert werden.

Bspw. ist es möglich, dass der Kurvenradius des Gespanns zur Anpassung der Soll-Geschwindigkeit automatisch in Abhängigkeit vom Kurvenradius der Erntemaschine sowie von einer Ausrichtung der Überladevorrichtung der Erntemaschine ermittelt wird. Fährt die Erntemaschine bspw. eine Rechtskurve und die Überladevorrichtung ist nach rechts ausgerichtet, kann davon ausgegangen werden, dass das Gespann die kurveninnere Einheit bildet, während es die kurvenäußere Einheit bildet, wenn die Überladevorrichtung nach links ausgerichtet ist. Somit kann der Kurvenradius des Gespanns, auch wenn er nicht anderweitig bekannt ist, wenigstens näherungsweise ermittelt und zur Anpassung der Soll-Geschwindigkeit verwendet werden. Für eine genauere Ermittlung des Kurvenradius können weitere Parameter herangezogen werden, wie bspw. eine eingestellte Vorsatzbreite der Erntemaschine.

Um zu verhindern, dass sich das Erntegut in einem Bereich des Anhängers aufgetürmt, während andere Bereiche noch vollständig oder größtenteils leer sind, ist es bevorzugt, dass ein Beladebereich innerhalb des Anhängers, in welchen das Erntegut übergeladen wird, zeitlich variiert wird. Anders ausgedrückt, das Erntegut wird in zeitlicher Abfolge in unterschiedliche Bereiche des Anhängers übergeladen. Derjenige Bereich, in denen aktuell das Überladen erfolgt, wird als Beladebereich bezeichnet. Es versteht sich, dass der Beladebereich zum einen von der Relativposition abhängt sowie zum anderen von der (momentanen) Anordnung der Überladevorrichtung bezüglich der Erntemaschine.

Zum einen ist es möglich, dass der Beladebereich durch Verändern der Relativposition des Anhängers variiert wird, indem zeitweise eine Soll-Geschwindigkeit vorgegeben wird, die einer von der Erntemaschinen-Geschwindigkeit der Erntemaschine abweichenden Ist-Geschwindigkeit entspricht. D. h., es wird zwischenzeitig nicht versucht, das Gespann mit der gleichen Geschwindigkeit wie die Erntemaschine fahren zu lassen, sondern es ist beabsichtigt, dass das Gespann zeitweise schneller bzw. langsamer fährt. Dementsprechend wird die (ggf. kalibrierte) Soll-Geschwindigkeit vorgegeben. Wird die Soll-Geschwindigkeit so gewählt, dass sie einer Ist-Geschwindigkeit entspricht, die größer ist als die Erntemaschinen-Geschwindigkeit, fährt das Gespann gegenüber der Erntemaschine vor und der Beladebereich verlagert sich innerhalb des Anhängers nach hinten. Wird die Soll-Geschwindigkeit so gewählt, dass sie einer Ist-Geschwindigkeit entspricht, die kleiner ist als die Erntemaschinen-Geschwindigkeit, fällt das Gespann gegenüber der Erntemaschine zurück und der Beladebereich verlagert sich innerhalb des Anhängers nach vorne.

Alternativ oder zusätzlich kann der Beladebereich durch Verändern der Einstellung der Überladevorrichtung variiert werden. Dies kann bspw. durch Schwenken der Überladevorrichtung und/oder Einstellen einer Auswurfbogenklappe erfolgen. Normalerweise ist es notwendig, auch die Einstellung der Überladevorrichtung zu variieren, da durch Verändern der Relativposition nur eine Verlagerung des Beladebereichs parallel zur Fahrtrichtung möglich ist, nicht jedoch quer hierzu.

Gemäß einer Alternative kann der Beladebereich automatisch durch eine Überladeautomatik der Erntemaschine variiert werden. Die entsprechende Überladeautomatik kann durch geeignete Sensoren (z.B. ein oder mehrere Kameras) die aktuelle Verteilung des Ernteguts im Anhänger feststellen und den Beladebereich jeweils so verändern, dass sich eine insgesamt gleichmäßige Verteilung ergibt. Die Überladeautomatik kann dabei insbesondere die Einstellung der Überladevorrichtung steuern, sie könnte allerdings auch (normalerweise zusätzlich) automatisch die Relativposition verändern, indem sie der Zugmaschine eine geeignete Soll-Geschwindigkeit vorgibt. Die Überladeautomatik kann teilweise softwaremäßig realisiert sein.

Alternativ oder zusätzlich kann der Beladebereich entsprechend Eingaben eines Fahrers der Erntemaschine variiert werden. Der Fahrer kann die entsprechenden Eingaben über ein entsprechendes Eingabegerät vornehmen, z.B. über Bedienelemente wie Knöpfe, Hebel, ein Sensorpad, einen Touchscreen oder dergleichen. Die Eingaben könnten prinzipiell auch nicht-manuell, z.B. akustisch (Sprachkommandos) oder optisch (durch Gesten) vorgenommen werden. Durch die Eingaben kann zum einen die Relativposition des Anhängers angepasst werden. Beispielsweise könnte der Fahrer durch Bedienen zwei Tasten (oder anderer Bedienelemente) den Anhänger wahlweise gegenüber der Erntemaschine vorfahren oder zurückfahren. Solange er den einen Knopf drückt, wird die Ist-Geschwindigkeit gegenüber der Erntemaschinen-Geschwindigkeit (z.B. um wenige km/h) erhöht, solange er den anderen Knopf drückt, wird die Ist-Geschwindigkeit gegenüber der Erntemaschinen-Geschwindigkeit verringert. Zum anderen kann durch die Eingaben des Fahrers auch die Ausrichtung der Überladevorrichtung verändert werden. Insbesondere wäre aber auch eine Kombination denkbar, bei welcher die Relativposition durch die Eingaben des Fahrers verändert wird, während die Ausrichtung der Überladevorrichtung durch die o.g. Überladeautomatik gesteuert wird. Die Aufgabe wird weiterhin gelöst mit einer Steueranordnung, die nicht Teil des Schutzumfangs der Erfindung ist. Die Steueranordnung ist für eine Erntemaschine sowie ein diese begleitendes Gespann mit einer Zugmaschine und einem hiervon gezogenen Anhänger vorgesehen, wobei die Erntemaschine dazu ausgebildet ist, Erntegut mittels einer Überladevorrichtung auf den Anhänger überzuladen. Die Steueranordnung weist Folgendes auf:
- eine erste Sendevorrichtung für die Erntemaschine, die dazu ausgebildet ist, ein erstes Steuersignal zu senden, um eine Relativposition des Anhängers relativ zur Erntemaschine zu beeinflussen,
- eine erste Empfangseinrichtung sowie eine zweite Sendeeinrichtung für den Anhänger, wobei die erste Empfangsvorrichtung dazu eingerichtet ist, das erste Steuersignal zu empfangen und die zweite Sendevorrichtung dazu eingerichtet ist, in Abhängigkeit vom ersten Steuersignal ein zweites Steuersignal zu senden, welches eine Geschwindigkeits-Information enthält, sowie
- eine zweite Empfangsvorrichtung sowie einen Geschwindigkeitsregler für die Zugmaschine, wobei die zweite Empfangsvorrichtung dazu eingerichtet ist, das zweite Steuersignal zu empfangen und der Geschwindigkeitsregler dazu eingerichtet ist, daraufhin die Ist-Geschwindigkeit der Zugmaschine entsprechend der Geschwindigkeits-Information einzustellen.

Die genannten Begriffe wurden weitgehend mit Bezug auf das erfindungsgemäße Verfahren erläutert und werden insoweit nicht nochmals erklärt. Die Bezeichnung "für die Erntemaschine" bedeutet, dass die jeweilige Vorrichtung dazu vorgesehen ist, an oder in der Erntemaschine angebaut oder integriert zu werden. Der Geschwindigkeitsregler ist direkt oder indirekt (z.B. über eine Verarbeitungseinheit) an die zweite Empfangseinrichtung gekoppelt und in eingebautem Zustand derart mit dem Antrieb der Zugmaschine verbunden, dass er über den Antrieb die Ist-Geschwindigkeit wie beschrieben einstellen kann.

Vorteilhafte Ausgestaltungen der Steueranordnung entsprechen denen des erfindungsgemäßen Verfahrens.

Die Aufgabe wird weiterhin gelöst mit einer Fahrzeug-Kombination aus einer Erntemaschine sowie einem Gespann mit einer Zugmaschine und einem hiervon gezogenen Anhänger, nach Anspruch 14.

Die Erntemaschine ist dazu ausgebildet, Erntegut mittels einer Überladevorrichtung auf den Anhänger überzuladen, und weist eine erste Sendevorrichtung auf, die dazu ausgebildet ist, ein erstes Steuersignal zu senden, um eine Relativposition des Anhängers relativ zur Erntemaschine zu beeinflussen, wobei der Anhänger eine erste Empfangsvorrichtung aufweist, die dazu eingerichtet ist, das erste Steuersignal zu empfangen, und eine zweite Sendevorrichtung, die dazu eingerichtet ist, in Abhängigkeit vom ersten Steuersignal ein zweites Steuersignal zu senden, welches eine Geschwindigkeits-Information enthält, und wobei die Zugmaschine eine zweite Empfangsvorrichtung aufweist, die dazu eingerichtet ist, das zweite Steuersignal zu empfangen, und einen Geschwindigkeitsregler, der dazu eingerichtet ist, daraufhin die Ist-Geschwindigkeit der Zugmaschine entsprechend der Geschwindigkeits-Information einzustellen. Vorteilhafte Ausgestaltungen der erfindungsgemäßen Fahrzeug-Kombination entsprechen denen des erfindungsgemäßen Verfahrens.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Draufsicht eines Feldhäckslers, einer Zugmaschine sowie eines Ladewagens, welche eine erfindungsgemäße Fahrzeug-Kombination bilden, mit der ein erfindungsgemäßes Verfahren durchgeführt werden kann;
- Fig. 2: eine Draufsicht der Fahrzeuge aus Fig. 1 sowie diesen zugehöriger Fahrspuren; sowie
- Fig. 3: ein Flussdiagramm eines erfindungsgemäßen Verfahrens.

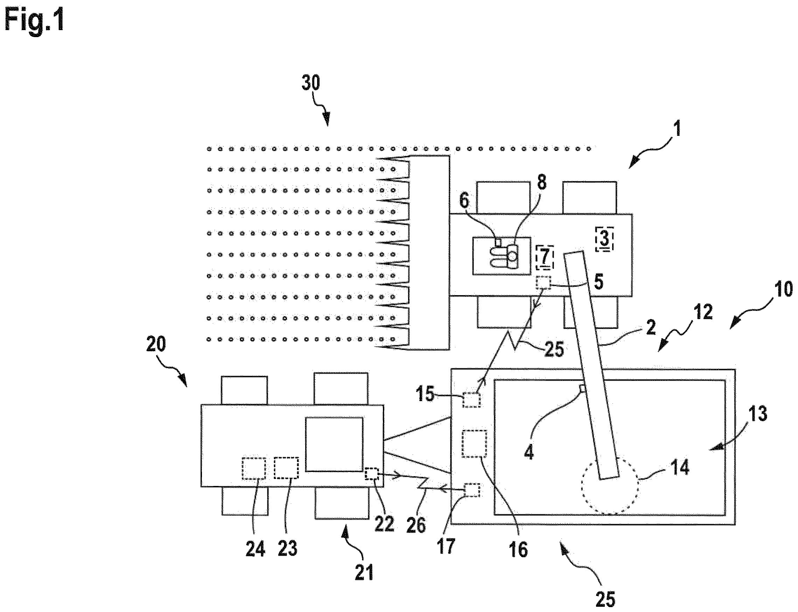

Fig. 1 zeigt eine Erntemaschine 1, in diesem Fall einen Feldhäcksler, eine Zugmaschine 20, sowie einen hieran angehängten Anhänger 12, in diesem Fall einen Ladewagen. Die Zugmaschine 20 und der Anhänger 12 bilden ein Gespann 10, das zusammen mit der Erntemaschine 1 eine erfindungsgemäße Fahrzeug-Kombination bildet. Die Erntemaschine 1, die zumindest zeitweise von einem Fahrer 8 gesteuert wird, nimmt im Betrieb Erntegut 30 auf, verarbeitet dieses und lädt es mittels einer Überladevorrichtung 2 auf den Anhänger 12 über. Genauer gesagt wird das Erntegut 30 in einen Beladebereich 14 eines Laderaums 13 übergeladen, wobei die Position des Beladebereichs 14 zum einen von einer Einstellung der Überladevorrichtung 2 abhängt sowie zum anderen von einer Relativpositionen des Anhängers 12 gegenüber der Erntemaschine 1. Die Erntemaschine 1 weist eine Überladeautomatik 3 auf, die mit einer Kamera 4 an der Überladevorrichtung 2 verbunden ist, über welche sie feststellen kann, welche Bereiche des Laderaums 13 stärker mit Erntegut 30 beladen sind und welche schwächer. Die Erntemaschine 1 weist auch eine erste Verarbeitungseinheit 7 auf, die (bspw. mittels GPS-Daten) eine Erntemaschinen-Geschwindigkeit der Erntemaschine 1 feststellen kann. Sie ist außerdem mit einer Eingabeeinheit 6 verbunden, die in Reichweite des Fahrers 8 angeordnet ist, sowie optional mit der Überladeautomatik 3. Des Weiteren ist sie an eine erste Sendevorrichtung 5 gekoppelt, die in diesem Fall als Sende-Empfangs-Vorrichtung ausgebildet ist.

Auf Seiten des Anhängers 12 ist eine erste Empfangsvorrichtung 15 vorgesehen, die ebenfalls als Sende-Empfangs-Vorrichtung ausgebildet ist und mit der ersten Sendevorrichtung 5 kompatibel ist, so dass diese drahtlos über eine erste Übertragungsstrecke 25 miteinander kommunizieren können. Die erste Empfangsvorrichtung 15 ist mit einer zweiten Verarbeitungseinheit 16 des Anhängers 12 verbunden, die ihrerseits wiederum mit einer zweiten Sendevorrichtung 17 verbunden ist. Letztere kann über eine zweite Übertragungsstrecke 26, in diesem Fall drahtgebunden gemäß dem ISOBUS-Standard, mit einer zweiten Empfangsvorrichtung 22 der Zugmaschine 20 kommunizieren. Genauer gesagt, kann der Anhänger 12 über die zweite Übertragungsstrecke 26 Funktionen der Zugmaschine 20 mittels TIM (Tractor Implement Management) steuern. Sowohl die zweite Sendevorrichtung 17 als auch die zweite Empfangsvorrichtung 22 sind als Sende-Empfangs-Vorrichtungen ausgebildet. Die zweite Empfangsvorrichtung 22 ist über eine dritte Verarbeitungseinheit 23 mit einem Geschwindigkeitsregler 24 der Zugmaschine 20 verbunden, der die Drehzahl einer angetriebenen Achse 21 der Zugmaschine 20 einstellen und somit eine Ist-Geschwindigkeit der Zugmaschine 20 beeinflussen kann.

Die erste Verarbeitungseinheit 7 ermittelt eine Soll-Geschwindigkeit für die Zugmaschine 20, die mittels der ersten Sendevorrichtung 5 als erstes Steuersignal an die erste Empfangsvorrichtung 15 gesendet und von dieser empfangen wird. Das empfangene erste Steuersignal wird von der zweiten Verarbeitungseinheit 16 decodiert und die darin enthaltene Soll-Geschwindigkeit wird entsprechend dem Kommunikationsstandard der zweiten Übertragungsstrecke 26 in einem zweiten Steuersignal neu codiert. Dann wird das zweite Steuersignal mittels der zweiten Sensoreinheit 17 gesendet und von der zweiten Empfangseinheit 22 empfangen. Die enthaltene Soll-Geschwindigkeit wird durch die dritte Verarbeitungseinheit 23 extrahiert und an den Geschwindigkeitsregler 24 gesendet, der daraufhin die angetriebene Achse 21 derart betreibt, dass bei einem schlupffreien Antrieb die Ist-Geschwindigkeit der Zugmaschine 20 der Soll-Geschwindigkeit entspricht.

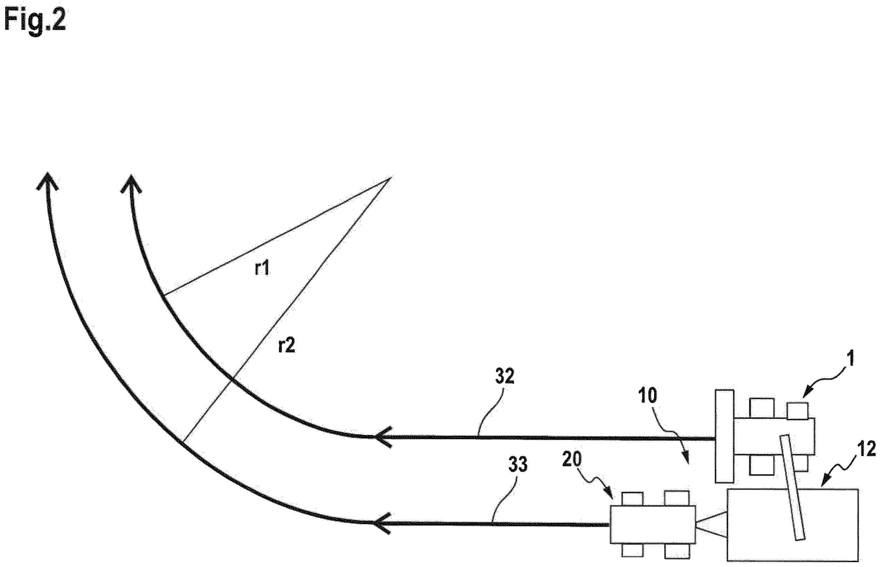

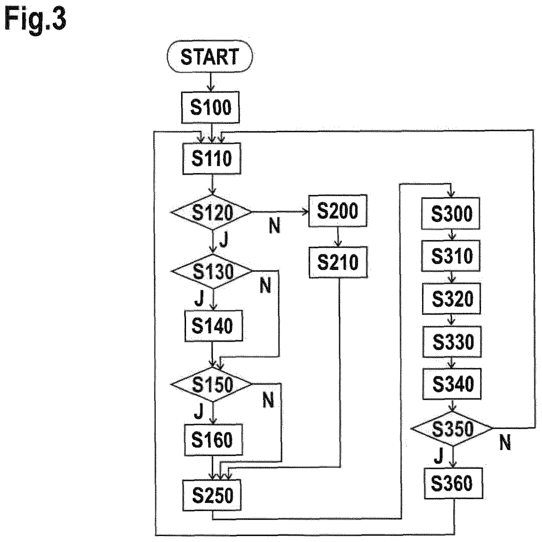

Fig. 2 zeigt schematisch vereinfacht eine erste Fahrspur 32 für die Erntemaschine 1 sowie eine zweite Fahrspur 33 für das Gespann 10. In diesem Beispiel fahren die Erntemaschine 1 und das Gespann 10 zunächst geradeaus und gehen dann in eine Kurvenfahrt über, bei welcher die Erntemaschine 1 auf einem ersten Kurvenradius r1 und das Gespann 10 auf einem zweiten Kurvenradius r2 fährt. Um zu gewährleisten, dass das Gespann 10 entlang der Fahrspuren 32, 33 auf gleichbleibender Höhe gegenüber dem Erntemaschine 1 fährt, sollten bei Geradeausfahrt die tatsächlichen Geschwindigkeiten übereinstimmen, während bei Kurvenfahrt die kurvenäußere Einheit schneller fahren sollte als die kurveninnere Einheit. Dies wird bei dem erfindungsgemäßen Verfahren berücksichtigt, welches nun anhand des Flussdiagramm von Fig. 3 erläutert wird.

Nach dem Start des Verfahrens wird in einem ersten Schritt S100 ein Kalibrierungsfaktor initialisiert, normalerweise mit dem Wert 1,0. In einem nächsten Schritt S110 wird von der ersten Verarbeitungseinheit 7 eine Erntemaschinen-Geschwindigkeit der Erntemaschine 1 festgestellt und die Soll-Geschwindigkeit mit diesem Wert initialisiert. Dann wird im Schritt S 120 überprüft, ob die Fahrspur 32 der Erntemaschine 1 aktuell geradeaus verläuft. Wenn dies der Fall ist, wird in Schritt S130 geprüft, ob die Relativpositionen des Anhängers 10 gegenüber der Erntemaschine 1 verändert werden soll. Die entsprechende Anforderung zur Änderung der Relativposition kann einerseits vom Fahrer 8 über die Eingabeeinheit 6 eingegeben werden. Optional könnte allerdings auch die Überladeautomatik 3 eine entsprechende Anforderung an die Verarbeitungseinheit 7 senden. Insbesondere Letzteres kann dem Zweck dienen, den Beladebereich 14 innerhalb des Laderaums 13 vor- oder zurückzuverlagern, ohne die Einstellung der Überladevorrichtung 2 verändern zu müssen. Je nachdem, ob der Anhänger gegenüber dem Erntemaschine 1 weiter vor- oder zurückverlagert werden soll, wird in Schritt S140 der Wert für die Soll-Geschwindigkeit erhöht (bspw. um einen festgelegten Betrag wie 1 km/h) oder verringert. Anschließend (bzw. unmittelbar nach Schritt S130, falls keine Änderung der Relativposition erforderlich ist) fährt das Verfahren mit Schritt S150 fort, wo geprüft wird, ob eine Kalibrierung notwendig ist. Diese kann bspw. durch den Fahrer ausgelöst werden, wenn dieser feststellt, dass die Ist-Geschwindigkeit des Gespanns 10 nicht mit derjenigen der Erntemaschine 1 übereinstimmt, obwohl dies aktuell der Fall sein sollte. Ein Grund hierfür kann z.B. darin liegen, dass auf Seiten der angetriebenen Achse 21 der Zugmaschine 20 ein erheblicher Schlupf auftritt, weshalb die Antriebsgeschwindigkeit der angetriebenen Achse 21 unzureichend ist, um die angestrebte Soll-Geschwindigkeit zu erreichen. In diesem Fall wird der bisherige Wert des Kalibrierungsfaktors verändert, bspw. vom Fahrer über einen Schieberegler oder dergleichen. Ist die Ist-Geschwindigkeit zu gering, wird der Kalibrierungsfaktor erhöht, ist sie zu hoch, wird der Kalibrierungsfaktor verringert. Die entsprechende Kalibrierung wird in Schritt S 160 durchgeführt, wonach das Verfahren mit Schritt S250 fortfährt.

Wird in Schritt S120 festgestellt, dass die Fahrspur 32 nicht geradeaus verläuft, d.h., dass sich die Erntemaschine 1 in einer Kurvenfahrt befindet, wird in Schritt S200 der erste Kurvenradius r1 ermittelt sowie hieraus der zweite Kurvenradius r2. Um Letzteres zu erreichen, wird die Einstellung der Überladevorrichtung 2 festgestellt, woraus sich schließen lässt, ob die Erntemaschine 1 die kurvenäußere Einheit oder die kurveninnere Einheit ist. Wenn diese Information mit der gewählten Vorsatzbreite der Erntemaschine 1 kombiniert wird, lässt sich aus dem ersten Kurvenradius r1 der zweite Kurvenradius r2 ermitteln. Aus dem Verhältnis der Kurvenradien r1, r2 sowie der Erntemaschinen-Geschwindigkeit kann dann die Soll-Geschwindigkeit berechnet werden, so dass das Verfahren bei Schritt S250 fortfahren kann.

In Schritt S250 wird die Soll-Geschwindigkeit mit dem Kalibrierungsfaktor multipliziert, d.h. falls der Kalibrierungsfaktor 1,0 beträgt, bleibt die Soll-Geschwindigkeit unverändert. Die bisherigen Verfahrensschritte können zumindest überwiegend mittels der ersten Verarbeitungseinheit 7 durchgeführt werden.

Anschließend fährt das Verfahren mit Schritt S300 fort. Dort wird das erste Steuersignal, welches die Soll-Geschwindigkeit enthält, mittels der ersten Sendevorrichtung 5 gesendet und in Schritt S310 von der ersten Empfangsvorrichtung 15 empfangen, bevor es von der zweiten Verarbeitungseinheit 16 decodiert und das zweite Steuersignal erstellt wird. In Schritt S320 wird das zweite Steuersignal, welches ebenfalls die Soll-Geschwindigkeit enthält, mittels der zweiten Sendevorrichtung 17 gesendet und in Schritt S330 von der zweiten Empfangsvorrichtung 22 empfangen. Die dritte Verarbeitungseinheit ermittelt aus dem zweiten Steuersignal die Soll-Geschwindigkeit und sendet diese an den Geschwindigkeitsregler 24. Daraufhin stellt der Geschwindigkeitsregler 24 in Schritt S340 die Ist-Geschwindigkeit entsprechend der Soll-Geschwindigkeit ein. Aufgrund der Kalibrierung ist in der übermittelten Soll-Geschwindigkeit ein gegebener Schlupf berücksichtigt.

In Schritt S350 wird überprüft, ob die Einstellung der Überladevorrichtung 2 verändert werden soll, normalerweise um die Position des Beladebereichs 14 zu verändern. Dies kann insbesondere durch die Überladeautomatik 3 ausgelöst werden, alternativ könnte allerdings auch der Fahrer 8 über die Eingabeeinheit 6 eine entsprechende Veränderung der Einstellung vornehmen. Falls angefordert, wird in Schritt S360 die Einstellung der Überladevorrichtung 2 geändert, wonach das Verfahren zu Schritt S110 zurückkehrt. Falls nicht, kehrt das Verfahren unmittelbar zu Schritt S110 zurück.

Die mit Bezug auf Fig.3 angegebene Folge der Verfahrensschritte ist bespielhaft und kann, soweit technisch sinnvoll, auch abgeändert werden. Ebenso ist es denkbar, dass Verfahrensschritte weggelassen werden und/oder weitere Verfahrensschritte hinzugenommen werden.

## Patentansprüche

1. Verfahren zur Steuerung eines eine Erntemaschine (1) begleitenden Gespanns (10) mit einer Zugmaschine (20) und einem hiervon gezogenen Anhänger (12), auf welchen die Erntemaschine (1) wenigstens zeitweise Erntegut (30) mittels einer Überladevorrichtung (2) überlädt, wobei die Erntemaschine (1) mit einer ersten Sendevorrichtung (5) ein erstes Steuersignal sendet (S300), um eine Relativposition des Anhängers (12) relativ zur Erntemaschine (1) zu beeinflussen, **dadurch gekennzeichnet, dass**
der Anhänger (12) mit einer ersten Empfangsvorrichtung (15) das erste Steuersignal empfängt (S310) und in Abhängigkeit vom ersten Steuersignal mit einer zweiten Sendevorrichtung (17) ein zweites Steuersignal sendet (S320), welches eine Geschwindigkeits-Information enthält, wobei die Zugmaschine (20) das zweite Steuersignal mit einer zweiten Empfangsvorrichtung (22) empfängt (S330) und daraufhin ihre Ist-Geschwindigkeit entsprechend der Geschwindigkeits-Information einstellt (S340).

2. Verfahren nach Anspruch 1, **dadurch gekennzeichnet, dass** mit dem zweiten Steuersignal eine Soll-Geschwindigkeit vorgegeben wird, wobei die Zugmaschine (20) ihre Ist-Geschwindigkeit entsprechend der Soll-Geschwindigkeit einstellt (S340).

3. Verfahren nach Anspruch 2,
**dadurch gekennzeichnet,**
**dass** die Soll-Geschwindigkeit mit dem ersten Steuersignal vorgegeben wird.

4. Verfahren nach einem der Ansprüche 2-3,
**dadurch gekennzeichnet,**
**dass** mit dem ersten Steuersignal wenigstens zeitweise eine von einer Erntemaschinen-Geschwindigkeit der Erntemaschine (1) abweichende Soll-Geschwindigkeit vorgegeben wird, um die Relativposition des Anhängers (12) zu verändern.

5. Verfahren nach Anspruch 2, 3 oder 4,
**dadurch gekennzeichnet,**
**dass** eine Kalibrierung der Soll-Geschwindigkeit durchgeführt wird (S160), so dass diese um einen Kalibrierungsfaktor verändert wird, um eine durch Schlupf bedingte Abweichung der Ist-Geschwindigkeit von der Soll-Geschwindigkeit auszugleichen.

6. Verfahren nach Anspruch 5,
**dadurch gekennzeichnet,**
**dass** die Kalibrierung auf Seiten der Erntemaschine (12) erfolgt (S160), so dass die kalibrierte Soll-Geschwindigkeit mit dem ersten Steuersignal vorgegeben wird.

7. Verfahren nach einem der Ansprüche 2-7,
**dadurch gekennzeichnet,**
**dass** während einer Kurvenfahrt, bei welcher die Erntemaschine (1) und das Gespann (10) auf unterschiedlichen Kurvenradien (r1, r2) fahren, die Soll-Geschwindigkeit automatisch in Abhängigkeit von den Kurvenradien (r1, r2) und der Erntemaschinen-Geschwindigkeit der Erntemaschine (1) angepasst wird (S210).

8. Verfahren nach Anspruch 7,
**dadurch gekennzeichnet,**
**dass** der Kurvenradius (r2) des Gespanns (10) zur Anpassung der Soll-Geschwindigkeit automatisch in Abhängigkeit vom Kurvenradius (r1) der Erntemaschine (1) sowie von einer Ausrichtung der Überladevorrichtung (2) der Erntemaschine (1) ermittelt wird (S200).

9. Verfahren nach einem der vorangehenden Ansprüche, **dadurch gekennzeichnet, dass** ein Beladebereich (14) innerhalb des Anhängers (12), in welchen das Erntegut (30) übergeladen wird, zeitlich variiert wird (S140, S360).

10. Verfahren nach Anspruch 9,
**dadurch gekennzeichnet,**
**dass** der Beladebereich (14) durch Verändern der Relativposition des Anhängers (12) variiert wird, indem zeitweise eine Soll-Geschwindigkeit vorgegeben wird, die einer von der Erntemaschinen-Geschwindigkeit der Erntemaschine (1) abweichenden Ist-Geschwindigkeit entspricht (S140).

11. Verfahren nach einem der Ansprüche 9-10,
**dadurch gekennzeichnet,**
**dass** der Beladebereich (14) durch Verändern der Einstellung der Überladevorrichtung (2) variiert wird (S360).

12. Verfahren nach einem der Ansprüche 9-11,
**dadurch gekennzeichnet,**
**dass** der Beladebereich (14) automatisch durch eine Überladeautomatik (3) der Erntemaschine (1) variiert wird.

13. Verfahren nach einem der Ansprüche 9-12,
**dadurch gekennzeichnet,**
**dass** der Beladebereich (14) entsprechend Eingaben eines Fahrers (8) der Erntemaschine (1) variiert wird.

14. Fahrzeug-Kombination aus einer Erntemaschine (1) sowie einem Gespann (10) mit einer Zugmaschine (20) und einem hiervon gezogenen Anhänger (12), wobei die Erntemaschine (1) dazu ausgebildet ist, Erntegut (30) mittels einer Überladevorrichtung (2) auf den Anhänger (12) überzuladen, und eine erste Sendevorrichtung (5) aufweist, die dazu ausgebildet ist, ein erstes Steuersignal zu senden (S300), um eine Relativposition des Anhängers (12) relativ zur Erntemaschine (1) zu beeinflussen, wobei der Anhänger (12) eine erste Empfangsvorrichtung (15) aufweist, die dazu eingerichtet ist, das erste Steuersignal zu empfangen (S310), und eine zweite Sendevorrichtung (17), die dazu eingerichtet ist, in Abhängigkeit vom ersten Steuersignal ein zweites Steuersignal zu senden (S320), welches eine Geschwindigkeits-Information enthält, und wobei die Zugmaschine (20) eine zweite Empfangsvorrichtung (22) aufweist, die dazu eingerichtet ist, das zweite Steuersignal zu empfangen (S330), und einen Geschwindigkeitsregler (24), der dazu eingerichtet ist, daraufhin die Ist-Geschwindigkeit der Zugmaschine (20) entsprechend der Geschwindigkeits-Information einzustellen (S340).

## Claims

1. Method for controlling a combination (10) which accompanies a harvesting machine (1) and consists of a tractor (20) and a trailer (12) which is pulled by the tractor and onto which the harvesting machine (1) at least temporarily loads crops (30) by means of a loading device (2), the harvesting machine (1) transmitting a first control signal using a first transmitting device (5) (S300) in order to influence a relative position of the trailer (12) relative to the harvesting machine (1),
**characterized in that**
the trailer (12) receives the first control signal using a first receiving device (15) (S310) and, depending on the first control signal, transmits a second control signal containing speed information using a second transmitting device (17) (S320), the tractor (20) receiving the second control signal using a second receiving device (22) (S330) and then adjusting its actual speed in accordance with the speed information (S340).

2. Method according to claim 1, **characterized in that** a target speed is specified using the second control signal, the tractor (20) adjusting its actual speed in accordance with the target speed (S340).

3. Method according to claim 2, **characterized in that** the target speed is specified using the first control signal.

4. Method according to either claim 2 or claim 3, **characterized in that** a target speed deviating from a harvesting machine speed of the harvesting machine (1) is specified at least temporarily using the first control signal in order to change the relative position of the trailer (12).

5. Method according to claims 2, 3 or 4, **characterized in that** a calibration of the target speed is carried out (S160) so that the target speed is changed by a calibration factor in order to compensate for a deviation in the actual speed from the target speed caused by slip.

6. Method according to claim 5, **characterized in that** the calibration is carried out on the side of the harvesting machine (12) (S160) so that the calibrated target speed is specified using the first control signal.

7. Method according to any of claims 2 to 7, **characterized in that,** during cornering in which the harvesting machine (1) and the combination (10) travel on different turning radii (r1, r2), the target speed is automatically adapted depending on the turning radii (r1, r2) and the harvesting machine speed of the harvesting machine (1) (S210).

8. Method according to claim 7, **characterized in that,** in order to adapt the target speed, the turning radius (r2) of the combination (10) is automatically determined depending on the turning radius (r1) of the harvesting machine (1) and on an orientation of the loading device (2) of the harvesting machine (1) (S200).

9. Method according to any of the preceding claims, **characterized in that** a loading region (14) within the trailer (12) into which the crop (30) is loaded is varied over time (S140, S360).

10. Method according to claim 9, **characterized in that** the loading region (14) is varied by changing the relative position of the trailer (12) by a target speed temporarily being specified, which corresponds to an actual speed deviating from the harvesting machine speed of the harvesting machine (1) (S140).

11. Method according to either claim 9 or claim 10, **characterized in that** the loading region (14) is varied by changing the adjustment of the loading device (2) (S360).

12. Method according to any of claims 9 to 11, **characterized in that** the loading region (14) is automatically varied by an automatic loading system (3) of the harvesting machine (1).

13. Method according to any of claims 9 to 12, **characterized in that** the loading region (14) is varied in accordance with inputs of a driver (8) of the harvesting machine (1).

14. Vehicle set comprising a harvesting machine (1) and a combination (10) which consists of a tractor (20) and a trailer (12) which is pulled by the tractor, wherein the harvesting machine (1) is designed to load crops (30) onto the trailer (12) by means of a loading device (2) and has a first transmitting device (5) which is designed to transmit a first control signal (S300) in order to influence a relative position of the trailer (12) relative to the harvesting machine (1), wherein the trailer (12) has a first receiving device (15), which is configured to receive the first control signal (S310), and a second transmitting device (17), which is configured, depending on the first control signal, to transmit a second control signal (S320) containing speed information, and wherein the tractor (20) has a second receiving device (22), which is configured to receive the second control signal (S330), and a speed controller (24), which is configured to then adjust the actual speed of the tractor (20) in accordance with the speed information (S340).

## Revendications

1. Procédé de commande d'un attelage (10) composé d'un tracteur (20) et d'une remorque (12) attelée à celui-ci, accompagnant une machine de récolte (1), et vers lequel la machine de récolte (1) transfère au moins de temps en temps du produit récolté (30) par un dispositif de transbordement (2), la machine de récolte (1) ayant un premier dispositif émetteur (5), qui émet un premier signal de commande (S300) pour influencer la position relative de la remorque (12) par rapport à la machine de récolte (1),
procédé **caractérisé en ce que**
la remorque (12) reçoit le premier signal de commande (S310) par un premier dispositif récepteur (15) et en fonction du premier signal de commande elle émet un second signal de commande (S320) par un second dispositif émetteur (17), ce signal de commande contenant une information de vitesse,
* le tracteur (20) recevant le second signal de commande (S330) par un second dispositif récepteur (22) et réglant (S340) ainsi sa vitesse réelle en fonction de l'information de vitesse.

2. Procédé selon la revendication 1,
**caractérisé en ce que**
le second signal de commande prédéfinit une vitesse de consigne,
* le tracteur (20) réglant (S340) sa vitesse réelle en fonction de la vitesse de consigne.

3. Procédé selon la revendication 2,
**caractérisé en ce que**
la vitesse de consigne est prédéfinie par le premier signal de commande.

4. Procédé selon l'une des revendications 2-3,
**caractérisé en ce que**
le premier signal de commande prédéfinit au moins de temps en temps une vitesse de consigne différente de la vitesse de la machine de récolte (1), pour modifier la position relative de la remorque (12).

5. Procédé selon les revendications 2, 3 ou 4,
**caractérisé en ce que**
on effectue un calibrage (S160) de la vitesse de consigne de façon à la faire varier d'un coefficient de calibrage pour compenser l'écart entre la vitesse réelle et la vitesse de consigne produite par le glissement.

6. Procédé selon la revendication 5,
**caractérisé en ce que**
le calibrage (S160) se fait du côté de la machine de récolte (1) pour que la vitesse de consigne calibrée soit prédéfinie par le premier signal de commande.

7. Procédé selon l'une des revendications 2 à 6,
**caractérisé en ce que**
dans un parcours en courbe, de la machine de récolte (1) et de l'attelage (10) circulant avec des rayons de courbure (r1, r2) différents, la vitesse de consigne est adaptée (S210) automatiquement en fonction des rayons de courbure (r1, r2) et de la vitesse de la machine de récolte (1).

8. Procédé selon la revendication 7,
**caractérisé en ce que**
le rayon de courbure (r2) de l'attelage (10) pour l'adaptation de la vitesse de consigne se détermine (S200) automatiquement en fonction du rayon de courbure (r1) de la machine de récolte (1) et de l'orientation du dispositif de transbordement (2) de la machine de récolte (1).

9. Procédé selon l'une des revendications précédentes,
**caractérisé en ce que**
la zone de chargement (14) dans la remorque (12) dans laquelle est transbordé le produit récolté (30) varie dans le temps (S140, S360).

10. Procédé selon la revendication 9,
**caractérisé en ce que**
la zone de chargement (14) est modifiée par le changement de la position relative de la remorque (12) **en ce que** l'on prédétermine de temps en temps une vitesse de consigne qui correspond (S140) à une vitesse réelle différente de la vitesse de la machine de récolte (1).

11. Procédé selon l'une des revendications 9-10,
**caractérisé en ce que**
la zone de chargement (14) est modifiée (S360) par le changement du réglage du dispositif de transbordement (2).

12. Procédé selon l'une des revendications 9 à 11,
**caractérisé en ce que**
la zone de chargement (14) est modifiée automatiquement par un automatisme de transbordement (3) de la machine de récolte (1).

13. Procédé selon l'une des revendications 9 à 12,
**caractérisé en ce que**
la zone de chargement (14) est modifiée en fonction des entrées faites par le conducteur (8) de la machine de récolte (1).

14. Combinaison de véhicules comprenant une machine de récolte (1) et un attelage (10) avec un tracteur (20) et une remorque (12) attelée à celui-ci,
- la machine de récolte (1) étant réalisée pour transborder le produit de récolte (30) à la remorque (12) par un dispositif de transbordement (2) et comprenant un premier dispositif émetteur (5) qui émet (S300) un premier signal de commande pour influencer la position relative de la remorque (12) par rapport à la machine de récolte (1),
- la remorque (12) ayant un premier dispositif récepteur (15) pour recevoir (S310) le premier signal de commande et un second dispositif émetteur (17) pour émettre (S320) un second signal de commande en fonction du premier signal de commande, le second signal contenant une information de vitesse, et
- le tracteur (20) ayant un second dispositif récepteur (22) pour recevoir (S330) le second signal de commande et un régulateur de vitesse (24) pour régler (S340) la vitesse réelle du tracteur (20) en fonction de l'information de vitesse.
